# DEMANDE DE BREVET EUROPEEN

(11) **EP 1 348 626 A1**
(43) Date de publication de la demande: **01.10.2003**
(21) Numéro de dépôt: 03100763.6
(22) Date de dépôt: 25.03.2003
(51) Int. Cl.: B64F 5/00, B60P 1/02

(54) **Plate-forme élévatrice mobile**

(30) Priorité: 28.03.2002 FR 0204063
(71) Demandeur: Liftlux Potain GmbH, 66763 Dillingen (DE)
(72) Inventeur: Ziegler, Gerhard, 66773 Schwalbach (DE); Winter, Siegfried, 14482 Potsdam (DE)
(74) Mandataire: Vièl, Frédérique (FR)

(57) **Abrégé**

L'invention concerne une plate-forme élévatrice mobile (1) munie d'un plateau relié à un châssis mobile et pouvant être levé et abaissé par rapport au châssis par des moyens de levage (4), sur laquelle des moyens de fixation (5, 61, 63) sont prévus pour la fixation d'une charge (7) permettant le transport de ladite charge. La plate-forme ainsi équipée peut servir aussi bien au transport qu'au levage de la charge. Les moyens de fixation sont dimensionnés de préférence pour résister à des conditions d'accélération et de décélération dont la valeur absolue est supérieure ou égale à 1 G. Ceci permettra notamment le transport par avion de la charge fixée sur la plate-forme élévatrice. Dans la pratique et pour des raisons de sécurité, on pourra dimensionner les moyens de fixation pour qu'ils supportent une accélération ou une décélération de l'ordre de 6 G.

## Description

L'invention concerne une plate-forme élévatrice mobile munie d'un plateau relié à un châssis mobile et pouvant être levé et abaissé par rapport au châssis par des moyens de levage.

Il est courant pour la livraison et la manutention d'objets lourds et encombrants de faire appel d'une part à un dispositif de transport, par exemple des palettes transportées par train ou camion, et d'autre part à des dispositifs de levage. Il faut donc déplacer l'objet à lever de son point de livraison vers son point de stockage d'où il sera levé par le dispositif de levage, par exemple une grue. Ce procédé compliqué peut être facilité en faisant appel à des dispositifs de levage mobiles tels que des ponts roulants ou des plates-formes élévatrices mobiles. Il faut donc en général un premier moyen pour transporter l'objet jusqu'au point de livraison et un deuxième moyen pour élever l'objet à la hauteur souhaitée après qu'il a été amené à l'aplomb de son point d'utilisation ou de stockage.

Cette difficulté se rencontre couramment par exemple dans l'aviation lorsqu'un moteur tombé en panne doit être remplacé. Si l'avion est dans un aéroport bien équipé, le moteur de rechange sera acheminé par la route ou par les airs puis il sera soulevé à l'aide d'un engin de levage présent sur place, tel qu'une grue, pour être fixé sur l'aile de l'avion.

Si l'avion est situé dans un aéroport moins bien équipé, notamment en cas de conflit armé, il faut non seulement acheminer le moteur de remplacement mais également l'engin de levage nécessaire à la dépose du moteur défaillant et à la pose du moteur de rechange. Dans la pratique, cela se traduit souvent par l'envoi de deux avions, l'un transportant le moteur de rechange, l'autre l'engin de levage. Ceci entraîne des coûts considérables.

Comme moyen de levage, il est courant d'utiliser une plate-forme telle que celle décrite dans le préambule. Grâce à la mobilité de la plate-forme, il est également possible de déplacer l'objet sur une faible distance à vitesse réduite d'un premier endroit, le point de livraison par exemple, vers un second endroit, à l'aplomb du point d'utilisation ou de stockage par exemple.

Cependant, il n'est pas possible de déplacer une lourde charge sur une distance importante à une grande vitesse sans que l'objet ne risque de tomber ou qu'il soit endommagé par les vibrations, ni de la transporter, même lorsque le plateau est en position basse.

On connaît du document US 4 461 455 A une plate-forme élévatrice munie d'un plateau pouvant être levé et abaissé par rapport à un châssis par des moyens de levage. Il est prévu dans ce document de placer sur la plate-forme un chariot portant par exemple un moteur d'avion. Le document prévoit de déplacer l'ensemble manuellement. Le chariot n'étant pas solidaire de la plate-forme, il n'est pas envisageable de déplacer l'ensemble sur une grande distance.

Le document DE 34 27 042 A divulgue une plate-forme élévatrice selon le préambule destinée à l'échange de moteurs d'avion. Cette plate-forme se compose d'un châssis sur lequel est monté un moyen de levage portant une plate-forme. Sur cette plate-forme on a placé un cadre intermédiaire flottant pouvant être déplacé dans la position voulue puis bloqué dans cette position par trois organes de déplacement. Le moteur d'avion est placé dans un adaptateur spécifique qui lui même est monté dans un cadre universel pour moteur d'avion placé sur quatre vérins hydrauliques reliés au cadre intermédiaire flottant. Ce dispositif particulièrement compliqué ne permet pas de transporter en toute sécurité le moteur d'avion sur une grande distance car les différents moyens de liaison reliant les différents éléments ne sont pas adaptés aux accélérations et vibrations importantes qui peuvent se faire sentir lors d'un transport.

L'objectif de l'invention est donc de développer un dispositif qui permette à la fois de transporter et de lever une charge telle qu'un moteur de rechange pour avion.

Cet objectif est atteint par la plate-forme selon le préambule sur laquelle des moyens de fixation sont prévus en outre pour la fixation d'une charge permettant le transport de ladite charge. La plate-forme ainsi équipée peut servir aussi bien au transport qu'au levage de la charge.

Dans un mode privilégié de réalisation de l'invention, les moyens de fixation sont dimensionnés pour résister à des conditions d'accélération et de décélération dont la valeur absolue est supérieure ou égale à 1 G dans une direction quelconque. Ceci permettra notamment le transport par avion de la charge fixée sur la plate-forme élévatrice. Dans la pratique et pour des raisons de sécurité, on pourra dimensionner les moyens de fixation pour qu'ils supportent une accélération ou une décélération de l'ordre de 6 G.

Il est préférable que les moyens de fixation comprennent des premiers moyens de fixation coopérant avec la masse à transporter en au moins un point situé par rapport à la direction principale de transport devant ou derrière la masse. Ces moyens sont principalement destinés à la fixation de la masse lors du transport qui se fait en général dans une direction particulière de sorte que les accélérations et les décélérations se font toujours dans la même direction. Ces premiers moyens de fixation comprennent de préférence au moins un bras fixé à la plate-forme et muni de moyens d'accrochage de la masse au bras, ledit bras s'étendant au-dessus du plateau lorsque celui-ci est en position basse. Afin d'assurer une meilleure résistance aux accélérations et décélérations, il est préférable que les premiers moyens de fixations soient fixés au châssis.

Dans un mode privilégié de réalisation de l'invention, les moyens de fixation comprennent des seconds moyens de fixation coopérant avec la masse à transporter en au moins un point situé par rapport à la direction principale de transport sur le côté de ladite masse. Ces seconds moyens de fixation sont placés de préférence sur le plateau. Ces seconds moyens de fixation sont principalement destinés à la manutention de la masse avant ou après le transport, notamment lorsque le plateau est levé.

Afin de faciliter la manutention, le plateau peut se déplacer par rapport aux moyens de levage dans un plan parallèle au plan principal du châssis et / ou être basculé par rapport audit plan parallèle. Ceci permettra notamment de déplacer la charge pour l'aligner avec des points de fixation particuliers en la rapprochant précisément de son point d'ancrage quelque soit l'inclinaison du sol. La plate-forme peut être en outre munie de moyens de compensation permettant d'assurer l'horizontalité du plateau. Ces moyens de compensation, de préférence automatiques, permettent de travailler avec un plateau horizontal même lorsque le terrain est en pente. De plus, la plate-forme peut être munie de moyens de déplacement propres, telle qu'un moteur.

Afin de permettre la préhension soit de la charge soit d'autres objets, il est préférable que la plate-forme soit munie d'au moins un bras articulé qui sera fixé de préférence au plateau. Pour des raisons de sécurité, le plateau pourra être muni d'une rambarde de sécurité pour le personnel manipulant la charge.

Cette plate-forme élévatrice mobile est particulièrement destinée au transport et la mise en place d'un moteur d'avion et / ou au transport par avions de charges devant être ensuite levées.

La plate-forme selon l'invention trouvera une application dans un procédé de remplacement d'un moteur d'avion défaillant dont les étapes principales sont les suivantes :
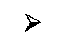 chargement et fixation d'un moteur d'avion sur une plate-forme élévatrice mobile conforme à l'invention ;
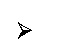 transport de la plate-forme élévatrice ainsi chargée ainsi que de moyens de levage supplémentaires, tels qu'une seconde plate-forme élévatrice mobile conforme à l'invention, jusqu'au lieu du remplacement ;
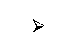 démontage du moteur à remplacer à l'aide des moyens de levage supplémentaires ;
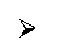 montage du moteur de rechange à l'aide de la plate-forme élévatrice mobile ;
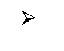 fixation du moteur remplacé sur une plate-forme élévatrice mobile, par exemple la seconde plate-forme conforme à l'invention.

Une seconde plate-forme élévatrice mobile conforme à l'invention peut servir de moyens de levage supplémentaires. Le moteur remplacé sera déposé directement sur cette seconde plate-forme à laquelle il pourra être fixé en vue de son transport. Si d'autres moyens de levages sont prévus, il sera alors possible de déposer le moteur remplacé sur la première plate-forme lorsque le moteur de rechange aura été fixé.

Un exemple de réalisation est décrit ci-dessous à l'aide des figures suivantes :

| | |
|---|---|
| Figure 1 | vue de côté d'une plate-forme élévatrice selon l'invention sur laquelle est posée et fixée pour le transport un moteur d'avion ; |
| Figure 2 | vue de dos de la plate-forme de la figure 1 ; |
| Figure 3 | vue de côté de la plate-forme de la figure 1 en position levée ; |
| Figure 4 | vue de face de la plate-forme de la figure 1 en position levée ; |
| Figure 5 | vue de côté de la plate-forme de la figure 1 en position levée sans charge avec bras articulé en action. |

La plate-forme élévatrice (1) selon l'invention présente un plateau (2) relié à un châssis mobile (3) par des moyens de levage (4), par exemple un mécanisme à pantographe. La plate-forme (1) présente de plus des premiers et des seconds moyens de fixation (5, 6) pour fixer l'objet à transporter (7).

Lors du transport, la plate-forme (1) est fixée dans le transporteur, par exemple un train ou un avion, de façon classique de sorte qu'elle ne puisse pas bouger.

Afin de permettre le transport de charges lourdes fixées sur la plate-forme, notamment dans des avions, les premiers moyens de fixation (5) au moins sont dimensionnés pour résister à des accélérations et des décélérations importantes, pouvant par exemple atteindre 6 G. Pour cela, les premiers moyens peuvent être constitués d'au moins un bras s'étendant au-dessus du plateau lorsque celui-ci est en position basse. Dans l'exemple considéré, les premiers moyens sont constitués de deux bras (51, 52) parallèles sensiblement perpendiculaires au plateau et reliés ensemble par deux traverses (53, 54). Des moyens d'accrochage (55) sont prévus pour fixer la charge (7) aux premiers moyens de fixation (5). Ces moyens d'accrochage (55) peuvent être des éléments pouvant être vissés dans des taraudages correspondants (56) situés sur la charge (7).

Les premiers moyens de fixation (51, 52, 53, 54) sont disposés de préférence devant ou derrière la charge par rapport au sens principal de déplacement lors du transport. Dans l'exemple proposé, la plate-forme (1) sera placée dans le transporteur de telle sorte que son axe de déplacement propre soit sensiblement parallèle à l'axe principal de déplacement du transporteur.

Pour mieux résister aux accélérations et aux décélérations, les premiers moyens de fixation (5) seront fixés de préférence au châssis mobile (3).

Une fois le transport terminé, la fixation de la charge sur la plate-forme n'a plus besoin de résister à des grandes accélérations ou décélérations. Par contre son maniement doit être simple. C'est pourquoi des seconds moyens de fixation (6) sont prévus pour maintenir la charge sur la plate-forme tout en permettant son maniement et notamment son levage vers son point d'utilisation. Pour cela, il est préférable que les seconds moyens de fixation (6) soient fixés au plateau (2). Dans l'exemple considéré, les seconds moyens de fixation (6) sont constitués de deux bras latéraux (61, 62) situés vers l'arrière de la plate-forme et munis de moyens d'accrochage par exemple des éléments pouvant être vissés dans des taraudages correspondants disposés sur la charge (7), ainsi que de deux bras latéraux (63, 64) placés plus en avant et sur lesquels peut être fixé un pont (65) muni de moyens d'accrochage coopérant avec des moyens d'accrochage correspondants sur la charge (7).

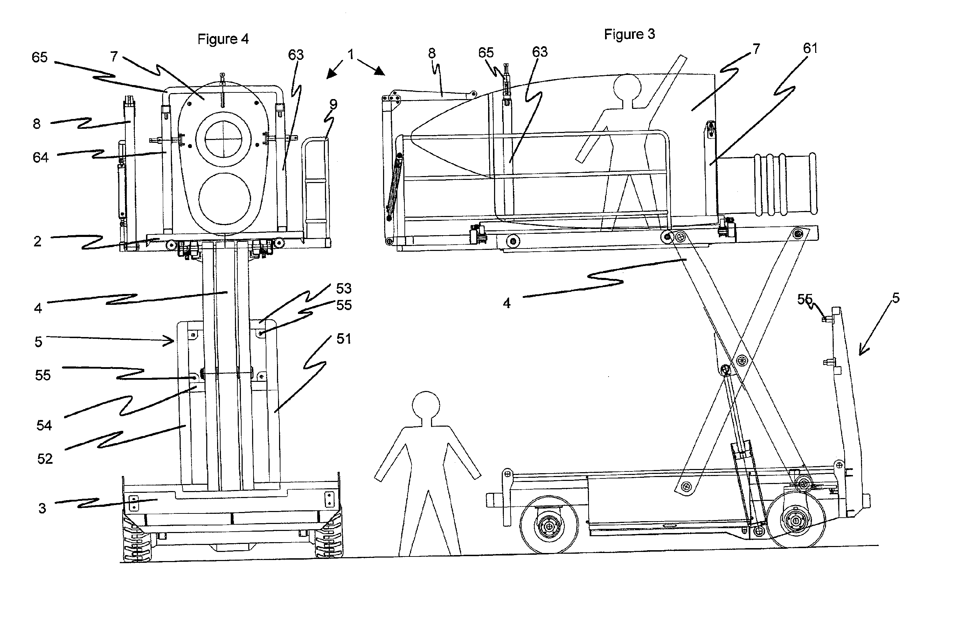

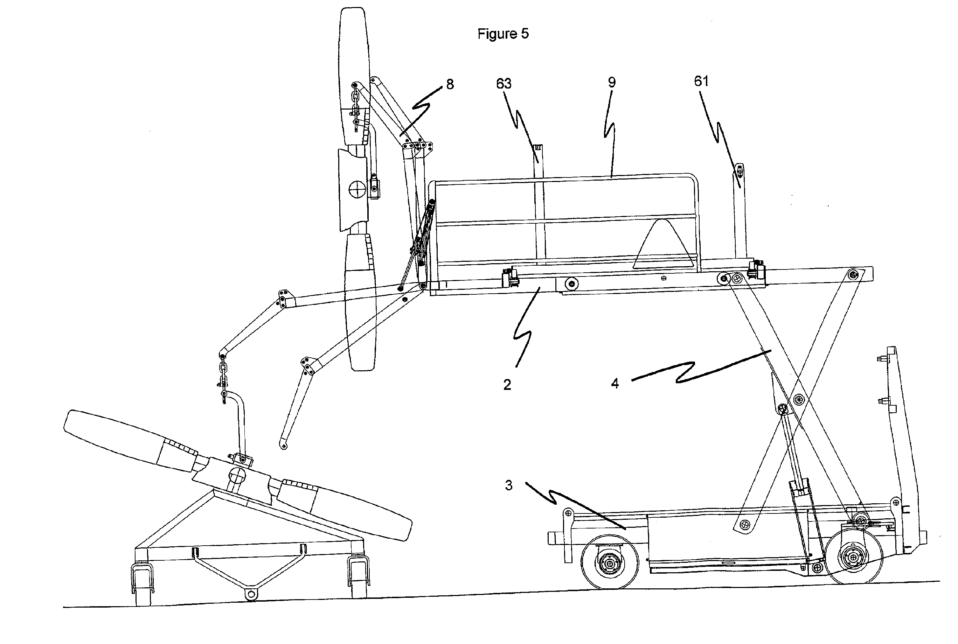

Pour faciliter le maniement de la charge, il est préférable que le plateau puisse se déplacer par rapport au châssis selon un plan parallèle au plan principal du châssis (3). On voit ainsi aux figures 3 et 5 que le plateau (2) est déplacé vers l'avant. Le plateau peut également être basculé par rapport audit plan parallèle pour faciliter la manutention de la charge (7).

Il est en outre préférable de munir la plate-forme de moyens de compensations qui permettent de maintenir automatiquement le plateau dans un plan horizontal. Cela permet de travailler horizontalement même si le terrain est irrégulier ou en pente.

De même, il est préférable que le plateau soit équipé d'un bras articulé (8). Ce bras peut servir notamment à lever d'autres pièces telles que par exemple une hélice d'avion comme le montre la figure 5. Ce bras articulé (8) sera fixé de préférence au plateau (2).

Une rambarde de sécurité (9) sera également conseillée pour assurer la sécurité du personnel.

Pour une plus grande indépendance, la plate-forme (1) peut être équipée d'un moteur.

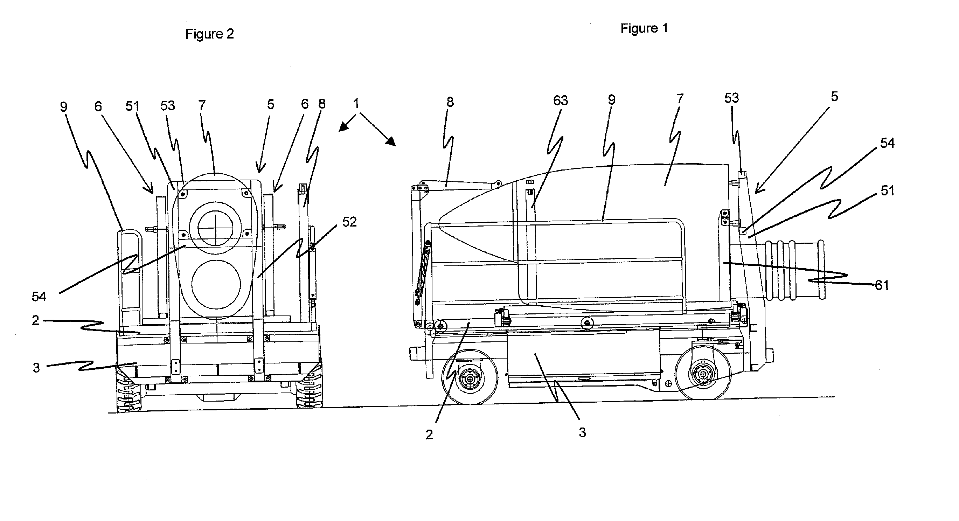

La plate-forme mobile (1) selon l'invention est particulièrement bien adaptée au transport et à la mise en place d'un moteur d'avion. En effet, lorsqu'un moteur d'avion défectueux doit être remplacé alors que l'avion en panne se trouve sur un aéroport insuffisamment équipé, le moteur de rechange peut être fixé sur une plate-forme conforme à l'invention comme le montrent les figures 1 et 2, puis celle-ci est acheminée par exemple par avion vers l'aéroport où se trouve l'avion en panne. Une fois déchargée, la plate-forme est déplacée vers l'avion. Les premiers moyens de fixation sont défaits et le plateau est levé jusqu'à la hauteur souhaitée pour que le moteur soit fixé (voir figures 3 et 4). Les seconds moyens de fixation sont défaits. Une fois le moteur fixé sur l'avion, on peut placer l'hélice en la saisissant à l'aide du bras articulé (8) comme le montre la figure 5. Grâce à la plate-forme selon l'invention, il n'est plus nécessaire d'acheminer des moyens de levage séparés.

Dans les aéroports équipés de moyens de levage, il sera possible de démonter le moteur défectueux, de remonter le moteur de rechange en fixant le cas échéant l'hélice puis de poser et de fixer le moteur défectueux sur la plate-forme pour son rapatriement. Une seule plate-forme est alors nécessaire.

Pour faciliter le chargement et le déchargement de la plate-forme dans la soute de l'avion, le châssis devra être dimensionné de telle sorte qu'il puisse rouler en suivant les courbes de la structure de l'avion.

De façon plus générale, la plate-forme conforme à l'invention est bien adaptée au transport par avion de charges devant être levées. En effet, l'utilisation de la plate-forme n'est pas limitée au transport et au levage d'un moteur à hélice pour avion. De même, il est possible de dimensionner la plate-forme pour d'autres types de transport tels que le transport par train.

Dans certaines applications, il sera possible de renoncer aux premiers ou aux seconds moyens de fixation, notamment lorsque les conditions de transport seront moins rigoureuses, autrement dit lorsque la charge sera soumise à de faibles accélérations ou décélérations.

La plate-forme conforme à l'invention remplit donc les deux fonctions de transporteur et de dispositif de levage. Elle permet d'économiser les frais de transport de moyens de levage.

### Liste des références

- 1.: plate-forme élévatrice
- 2.: plateau
- 3.: châssis mobile
- 4.: moyens de levage
- 5.: premiers moyens de fixation
- 6.: seconds moyens de fixation
- 7.: objet à transporter
- 8.: bras articulé
- 9.: rambarde de sécurité

- 51.: premier bras
- 52.: second bras
- 53.: traverse supérieure
- 54.: traverse médiane
- 55.: élément d'accrochage
- 56.: taraudage
- 61.: bras latéral arrière
- 62.: bras latéral arrière
- 63.: bras latéral avant
- 64.: bras latéral avant
- 65.: pont

## Revendications

1. Plate-forme élévatrice mobile (1) munie d'un plateau (2) relié à un châssis mobile (3) et pouvant être levé et abaissé par rapport au châssis (3) par des moyens de levage (4), **caractérisée en ce que** des moyens de fixation (5, 6) sont prévus sur la plate-forme élévatrice mobile (1) pour la fixation d'une charge (7) permettant le transport de ladite charge.

2. Plate-forme élévatrice mobile (1) selon la revendication 1, **caractérisée en ce que** les moyens de fixation (5) sont dimensionnés pour résister à des conditions d'accélération et de décélération dont la valeur absolue est supérieure ou égale à 1 G.

3. Plate-forme élévatrice mobile (1) selon la revendication 1 ou 2, **caractérisée en ce que** les moyens de fixation (5, 6) comprennent des premiers moyens de fixation (5) coopérant avec la masse à transporter (7) en au moins un point situé par rapport à la direction principale de transport devant ou derrière la masse (7).

4. Plate-forme élévatrice mobile selon la revendication 3, **caractérisée en ce que** les premiers moyens de fixation (5) comprennent au moins un bras fixé (51, 52) à la plate-forme (1), de préférence au châssis (3), et muni de moyens d'accrochage (55) de la masse (7) au bras (51, 52), ledit bras (51, 52) s'étendant au-dessus du plateau (2) lorsque celui-ci est en position basse.

5. Plate-forme élévatrice mobile (1) selon l'une des revendications précédentes, **caractérisée en ce que** les moyens de fixation (5, 6) comprennent des seconds moyens de fixation (6, 61, 62, 63, 64, 65) coopérant avec la masse à transporter (7) en au moins un point situé par rapport à la direction principale de transport sur le côté de ladite masse (7), lesdits seconds moyens de fixation (6, 61, 62, 63, 64) étant placés de préférence sur le plateau (2).

6. Plate-forme élévatrice mobile (1) selon l'une des revendications précédentes, **caractérisée en ce que** le plateau (2) peut se déplacer par rapport aux moyens de levage (4) dans un plan parallèle au plan principal du châssis (3) et / ou être basculé par rapport audit plan parallèle.

7. Plate-forme élévatrice mobile (1) selon l'une des revendications précédentes, **caractérisée en ce que** des moyens de compensation sont prévus pour assurer l'horizontalité du plateau (2).

8. Plate-forme élévatrice mobile (1) selon l'une des revendications précédentes, **caractérisée en ce qu**'elle est munie de moyens de déplacement propres.

9. Plate-forme élévatrice mobile (1) selon l'une des revendications précédentes, **caractérisée en ce qu'**elle est munie d'au moins un bras articulé (8) fixé de préférence sur le plateau (2).

10. Plate-forme élévatrice mobile (1) selon l'une des revendications précédentes, **caractérisée en ce que** le plateau (2) est muni d'au moins une rambarde de sécurité (9).

11. Utilisation d'une plate-forme élévatrice mobile (1) selon l'une des revendications précédentes pour le transport et la mise en place d'un moteur d'avion (7).

12. Utilisation d'une plate-forme élévatrice mobile (1) selon l'une des revendications 1 à 10 pour le transport par avions de charges (7) devant être levées.

13. Procédé de remplacement d'un moteur d'avion **caractérisé par** les étapes suivantes :
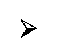 chargement et fixation d'un moteur d'avion (7) sur une plate-forme élévatrice mobile (1) selon l'une des revendications 1 à 10 ;
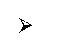 transport de la plate-forme élévatrice (1) ainsi chargée ainsi que de moyens de levage supplémentaires, tels qu'une seconde plate-forme élévatrice mobile (1) selon l'une des revendications 1 à 10, jusqu'au lieu du remplacement ;
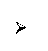 démontage du moteur à remplacer à l'aide des moyens de levage supplémentaires ;
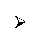 montage du moteur de rechange (7) à l'aide de la plate-forme élévatrice mobile (1) ;
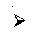 fixation du moteur remplacé sur une plate-forme élévatrice mobile (1), par exemple la seconde plate-forme, selon l'une des revendications 1 à 10.
